# EUROPEAN PATENT SPECIFICATION

(11) **EP 3 172 028 B1**
(45) Date of publication and mention of the grant of the patent: **02.05.2018**
(21) Application number: 15741351.9
(22) Date of filing: 26.06.2015
(51) Int. Cl.: B29C 49/12, B29C 49/46, B29C 49/06, B29C 49/42, B29C 49/62, B29C 49/78, B29K 67/00, B29L 31/00

(54) **METHOD FOR MOULDING AND STERILIZING A CONTAINER MADE OF PLASTIC MATERIAL, DEVICE FOR MOULDING AND STERILIZING A CONTAINER MADE OF PLASTIC MATERIAL AND MOULDING AND STERILIZING MACHINE**
VERFAHREN ZUM FORMEN UND STERILISIEREN EINES BEHÄLTERS AUS KUNSTSTOFF, VORRICHTUNG ZUM FORMEN UND STERILISIEREN EINES BEHÄLTERS AUS KUNSTSTOFF UND FORM- UND STERILISIERMASCHINE
PROCEDE POUR LE MOULAGE ET LA STERILISATION D'UN RECIPIENT EN MATIERE PLASTIQUE, DISPOSITIF POUR LE MOULAGE ET LA STERILISATION D'UN RECIPIENT EN MATIERE PLASTIQUE ET MACHINE DE MOULAGE ET DE STERILISATION

(30) Priority: 21.07.2014 IT PR20140051
(43) Date of publication of application: 31.05.2017
(73) Proprietor: Gea Procomac S.p.A., 43038 Sala Baganza (PR) (IT)
(72) Inventor: PAGLIARINI, Paolo, I-43123 Parma (IT); CASAPPA, Luigi, I-43029 Mamiano (IT)
(74) Representative: Dondi, Silvia
(86) International application number: PCT/IB2015/054840
(87) International publication number: WO 2016/012885

(56) References cited:
- EP-A1- 2 431 409
- WO-A1-2012/130197
- US-B1- 6 565 791

## Description

### Technical field

The object of the present invention is a method for moulding and sterilizing a container made of plastic material, a device for moulding and sterilizing a container made of plastic material, and a moulding and sterilizing machine. The reference sector is the bottling of so-called "sensitive" food products, i.e. products that are particularly sensitive to bacteriological contamination and oxidation, such as, for example, isotonic drinks, juices, nectars, soft drinks, tea, milk-based drinks, coffee-based drinks, etc., for which the prevention of possible microbiological contamination throughout all packaging stages is of fundamental importance.

### Background art

Packaging lines using aseptic technology are already known, wherein the various operations take place in a controlled contamination environment, so that the bottled products can be stored for a prolonged period of time and have chemical/physical and organoleptic stability even at room temperature.

Aside from differences in design, a "conventional" aseptic bottling line envisages:
- moulding the container starting with a parison made of a plastic material;
- chemical sterilization of the moulded container;
- rinsing, filling and capping of the filled container, to be carried out in a sterile environment.

The main drawback of conventional lines is related to the need to have to sterilize the container once it has been moulded and to maintain the sterilized state thereof throughout all subsequent operations, for example the filling and capping operations.

A modern concept of an aseptic bottling line instead envisages:
- sterilization of the parison using chemical agents or radiation sterilization;
- "aseptic" moulding of the container starting with a parison made of a thermoplastic material;
- rinsing and capping of the filled container, to be carried out in a sterile environment.

In this regard, the Applicant has developed a moulding apparatus for moulding under aseptic conditions, in which the moulding rotary carousel is protected by an isolation device suitable for defining a controlled-contamination environment, while the movement means for moving the carousel and moulds are located outside of said isolation device (see the European Patent n. EP2246176).

The preliminary sterilization stage involves all devices that come into contact with the parison subjected to moulding by blowing and stretching, including for example the gripping members, the stretching rod and the blown air circuit. The Applicant has thus developed *ad hoc* solutions for the stretching rod (see European Patent no. EP2340157) and for the blown air circuit (European patent application no. EP2643142).

In this manner, the Applicant has reached the point of developing a completely aseptic blow moulding machine, characterized by evident structural complexity.

It should also be added that not all the manual procedures required during operation (e.g. removal of obstacles) can be performed with the use of handling gloves. In some cases, it may be necessary to open the isolator access door, resulting in the loss of sterile conditions. Upon completion of the procedure, the sterile conditions of the environment must be restored, resulting in an evident loss of time due to downtime of the line.

Aside from sterilization using chemical agents or radiation sterilization, the use of plasma for the sterilization of objects has been adopted for several decades, for example in the medical field.

The plasma is obtained by passing a gas or a gas mixture (e.g. air or oxygen) between two electrodes between which an electrical discharge is generated, so that ionized particles are formed. Since the first plasma generators, which comprised a vacuum chamber, technology has evolved towards the generation of atmospheric pressure plasma. For example, patent no. WO2007/071720 refers to a method and apparatus for the sterilization of objects by means of plasma generated at atmospheric pressure.

The principal advantages associated with the use of plasma for sterilization consist of:
- treatment of objects of any shape and material;
- rapidity of the treatment;
- safety of the process, owing to the low temperatures involved and the absence of chemical agents.

Plasma sterilization has thus spread to diverse industrial sectors, among which the bottling sector as well.

For example, patent no. WO2009/101156 proposes the treatment of containers and HEPA filters using plasma.

Patent no. WO99/17334 discloses the use of plasma for sterilizing the inside of bottles.

Patent no. EP2182991 discloses an apparatus and method for sterilizing parisons made of a plastic material using plasma. It is specified that in a first embodiment the sterilization treatment uses plasma at ambient pressure, whereas in a second embodiment the plasma treatment is carried out at a pressure higher than ambient pressure. In all of the embodiments described, the plasma generator is located along the transport path of the parisons, upstream of the blowing device, and therefore sterilization takes place prior to the blowing phase.

Patent no. WO 2012/130197 also describes the use of plasma for sterilizing parisons made of plastic material. In this solution, the plasma generator is located at the blowing station. In particular, the plasma is generated at atmospheric pressure outside of the parison and then inserted therein by means of a nozzle placed in the stretching rod.

If one wishes to use plasma to decontaminate parisons or containers on an aseptic bottling line, one is in any case always faced with the problem of having to manage the interface separating the controlled-contamination environment and the contaminated external environment.

In this context, the basic technical task of the present invention is to offer a method for moulding and sterilizing a container made of plastic material, a device for moulding and sterilizing a container made of plastic material and a moulding and sterilizing machine that are capable of overcoming the drawbacks of the prior art cited hereinabove.

### Disclosure of the invention

In particular, an aim of the present invention is to make available a method for moulding and sterilizing a container made of plastic material that is capable of reducing or eliminating the risk of contamination during manual procedures (e.g. removal of obstacles), adjustments and format changes.

Another aim of the present invention is to offer a device for moulding and sterilizing a container made of plastic material, the device being compact and in which it is easy to maintain ambient contamination below a desired level.

A further aim of the present invention is to make available a machine for moulding and sterilizing containers made of plastic material, the machine being structurally simpler compared to the prior-art solutions.

The defined technical task and the specified aims are substantially achieved by a method for moulding and sterilizing a container made of plastic material, a device for moulding and sterilizing a container made of plastic material, and a moulding and sterilizing machine, said method, said device and said machine comprising the technical characteristics set forth in one or more of the appended claims.

### Brief description of drawings

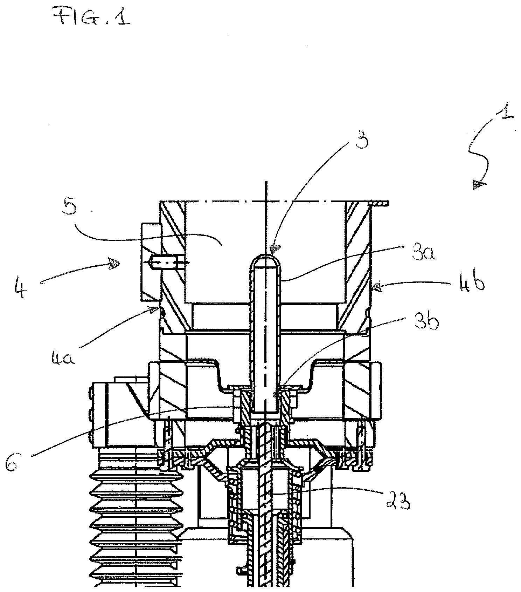

Further characteristics and advantages of the present invention will become more apparent from the approximate and thus non-limiting description of a preferred, but not exclusive, embodiment of a method for moulding and sterilizing a container made of plastic material, a device for moulding and sterilizing a container made of plastic material, and a moulding and sterilizing machine, as illustrated in figure 1, which is a sectional view of a device for moulding and sterilizing a container made of plastic material according to the present invention.

### Detailed description of preferred embodiments of the invention

With reference to the figures, a device for moulding and sterilizing a container starting with a parison 3 in plastic material, for example PET, is indicated by the number 1.

The parison 3 has a tubular body 3a and a neck 3b that does not undergo the moulding process.

The moulding and sterilizing device 1 comprises a mould 4, partially or entirely made of metal material. The mould 4 is configurable in at least:
- an open configuration, in which the mould 4 receives the parison 3 subjected to subsequent operations;
- a closed configuration, in which the mould 4 defines
   at least a housing cavity 5 for the parison 3 or the moulded container. The mould 4 preferably comprises two half-moulds 4a, 4b suitable for defining the shaping of the body of the container and a bottom plate (not illustrated) suitable for defining the bottom of the container.

The two half-moulds 4a, 4b are relatively mobile with respect to each other in such a manner that:
- when the mould 4 is in the closed configuration, the two half-moulds 4a, 4b are brought closer and define the housing cavity 5;
- when the mould 4 is in the open configuration, the two half-moulds 4a, 4b are moved away from each other to enable insertion of the parison 3 or to disengage the moulded container.

The moulding and sterilizing device 1 further comprises a blowing nozzle 6 (or seal) and a stretching rod 23.

The blowing nozzle 6 is applicable to the neck 3b of the parison 3 in order to blow a blowing fluid such as air into it.

In the embodiment described and illustrated herein, the fluid is provided by supply means of a known type.

As can be seen in figure 1, the blowing nozzle 6 is applied to the neck 3b of the parison 3 in such a manner as to abut and create a tight seal on a transverse protrusion 3c (known in the field by the technical term "bague") of the neck 3b of the parison 3.

The stretching rod 23, which is at least partially made of metal material, is insertable inside the parison 3 or the moulded container. The stretching rod 23 is preferably entirely made of metal material.

The moulding and sterilizing device 1 further comprises a circuit for evacuating the blowing fluid from the moulded container.

Originally, means are provided for applying a voltage difference between the stretching rod 23 and the mould 4 in such a manner as to transform the fluid at atmospheric pressure remaining inside the moulded container into plasma.

In other words, in the closed configuration, the stretching rod 23 and the mould 4 constitute the electrode and counter electrode of a plasma generator, respectively.

Given that the seal 6 is at the same potential as the two half-moulds 4a, 4b, the plasma is also generated in the external zone of the neck 3b of the parison 3.

The voltage difference applied between the stretching rod 23 and the mould 4 in the closed configuration preferably has a value of about 30 kV.

The moulding and sterilizing machine (not illustrated) proposed herein comprises a plurality of moulding and sterilizing devices 1 described hereinabove.

The moulding and sterilizing machine is preferably of the rotary carousel type. Alternatively, the machine may be of the linear type.

The method for moulding and sterilizing a container made of plastic material is explained below.

First of all, the mould 4 must be arranged in the open configuration.

For this purpose, the two half-moulds 4a, 4b are moved away from each other to enable insertion of the parison 3.

Once the parison 3 has been inserted, the two half-moulds 4a, 4b are moved close to each other to define the housing cavity 5 for the parison 3. In this manner, the mould 4 is brought into the closed configuration.

The blowing nozzle 6 is applied to the neck 3b of the parison 3 in such a manner as to create a tight seal on the bague 6c and close the opening of the parison 3 in a tightly sealed manner. The stretching rod 23 is inserted inside the parison 3.In particular, the stretching rod 23 passes through the blowing nozzle 6 and gradually penetrates the parison 3.

At the same time, the blowing fluid is blown into the parison 3.

In particular, the blowing step comprises two separate substeps: one for pre-blowing and one for actual blowing.

During the pre-blowing step, the fluid blown into the parison 3 has a maximum pressure of about 16 bar.

During the pre-blowing step, the stretching rod 23 gradually penetrates the parison 3 until reaching the bottom thereof. After touching the bottom, the stretching rod 23 continues its linear course so as to stretch the tubular body 3a of the parison 3 until substantially reaching the desired length of the container to be obtained.

During the pre-blowing step, the fluid blown into the parison 3 has a maximum pressure of about 40 bar.

Upon completion of the blowing and stretching step, the pressurized fluid remaining inside the container is evacuated to the exterior by means of the evacuation circuit. The evacuation circuit is of a known type and therefore it is not described herein.

In the meantime, the stretching rod 23 is kept inside the moulded container. The stretching rod 23 is preferably kept in the moulded container for a length of time that can last up to 2 seconds.

At this point, a voltage difference is applied between the stretching rod 23 and the mould 4 when still in the closed configuration; the voltage difference is such as to transform the fluid at atmospheric pressure remaining inside the container after evacuation into plasma.

For example, a voltage difference in the range of 20-30 kV is applied so as to bring about an electrical discharge that leads to the generation of plasma.

The characteristics and the advantages of the method for moulding and sterilizing a container made of plastic material, of the device for moulding and sterilizing a container made of plastic material, and of the moulding and sterilizing machine according to the present invention prove to be clearly indicated in the description provided.

In particular, the moulding device proposed herein also makes it possible to sterilize the moulded container, owing to the generation of plasma directly inside the container while it is still in the mould at the end of the blowing and stretching step.

Activation of the plasma does not require special technical measures given that it takes place following evacuation of the blowing fluid, and therefore at atmospheric pressure. In fact, it is a known fact that an increase in the pressure of the fluid makes it more difficult to activate the plasma because it increases the resistance of the fluid (which functions as a dielectric) to the discharge. Therefore, activation is decidedly simpler if the fluid is at atmospheric pressure, as in the proposed invention.

The moulding and sterilizing device is compact and structurally simple in that it only requires the application of a voltage difference between the metal stretching rod and the closed mould.

Given that sterilization of the parison is carried out in the housing cavity following the moulding process, a "conventional" blower can be used. This "conventional" blower thus becomes a blower/sterilizer.

The structural complexity of the "aseptic" blower with an isolator can thus be left aside, along with all the members operating at the interface thereof (e.g. sealing systems between the sterile zone and the external environment, confinement of the stretching rod, sterilization system for the blown air circuit, etc.).

Sterilization cycles for sterilizing the environment and the blown air prior to production are no longer necessary.

Moreover, the sterilizer for sterilizing the parisons upstream of the blower can thus be eliminated.

In conclusion, the use of plasma makes it possible to reduce sterilization time, to avoid the use of chemical agents and the accumulation of peroxides in the container, and to sterilize the internal surface and the external neck of the parison and the container in a substantially uniform manner.

## Claims

1. Method for moulding and sterilizing a container made of plastic material, comprising the steps of:
preparing a mould (4), at least partially made of metal material, in an open configuration;
inserting a parison (3) of plastic material into said mould (4);
bringing said mould (4) into a closed configuration;
inserting a stretching rod (23) at least partially made of metal material into said parison (3);
blowing a blowing fluid into said parison (3) placed in the mould (4) and simultaneously stretching said parison (3) by means of the stretching rod (23) in such a way as to obtain the container,
**characterized in that** it comprises the steps of:
evacuating the fluid at the end of the blowing and stretching step;
applying a voltage difference between said stretching rod (23) and said mould (4) in the closed configuration in such a way as to transform the fluid at atmospheric pressure remained inside the moulded container into plasma.

2. Method according to claim 2, wherein the step of applying a voltage difference is performed after the completion of the step of evacuating the fluid.

3. Method according to claim 1 or 2, wherein the step of blowing the blowing fluid into said parison (3) comprises the substeps of:
pre-blowing the fluid having a maximum pressure of around 16 bar;
blowing the fluid having a maximum pressure of around 40 bar in such a way as to obtain the container.

4. Device (1) for moulding and sterilizing a container made of plastic material, comprising:
a mould (4), at least partially made of metal material, configurable in at least an open configuration to receive a parison (3) of plastic material, and in a closed configuration wherein it defines at least a housing cavity (5) of the parison (3) or the moulded container;
a blowing nozzle (6) applicable to the neck (3b) of the moulded parison (3) in order to blow a blowing fluid into it;
a stretching rod (23) at least partially made of metal material, insertable inside said parison (3) or said container;
a circuit for evacuating the blowing fluid from the moulded container,
**characterized in that** it comprises means for applying a voltage difference between said stretching rod (23) and said mould (4) in such a way as to transform the fluid at atmospheric pressure remained inside the moulded container into plasma.

5. Moulding and sterilizing device (1) according to claim 4, wherein said mould (4) comprises two half-moulds (4a, 4b) suitable for defining the shaping of the body of the container and a bottom plate suitable for defining the bottom of the container.

6. Moulding and sterilizing device (1) according to claim 4 or 5, wherein the voltage difference applied between said stretching rod (23) and said mould (4) has a value of about 30 kV.

7. Machine for moulding and sterilizing containers made of plastic material, comprising a plurality of moulding and sterilizing devices (1) according to any one of claims 4 to 6.

## Patentansprüche

1. Verfahren zum Formen und Sterilisieren eines Behälters aus Kunststoff, umfassend die Schritte:
Vorbereiten einer Form (4), die zumindest teilweise aus Metallmaterial besteht, in einer offenen Konfiguration;
Einführen eines Vorformlings (3) aus Kunststoff in die Form (4);
Bringen der Form (4) in eine geschlossene Konfiguration;
Einführen einer Streckstange (23), die zumindest teilweise aus Metallmaterial besteht, in den Vorformling (3);
Einblasen einer Blasflüssigkeit in den in der Form (4) angeordneten Vorformling (3) und gleichzeitiges Strecken des Vorformlings (3) mittels der Streckstange(23), um den Behälter zu erhalten,
**dadurch gekennzeichnet, dass** es die Schritte umfasst von:
Evakuieren der Flüssigkeit am Ende des Blas- und Streckschrittes;
Anlegen einer Spannungsdifferenz zwischen der Streckstange (23) und der Form (4) in der geschlossenen Konfiguration, so dass die Flüssigkeit, die im Inneren des geformten Behälters verblieben ist, bei Atmosphärendruck in Plasma umgewandelt wird.

2. Verfahren nach Anspruch 2, wobei der Schritt des Anlegens einer Spannungsdifferenz nach Abschluss des Schrittes des Evakuierens der Flüssigkeit durchgeführt wird.

3. Verfahren nach Anspruch 1 oder 2, wobei der Schritt des Einblasens der Blasflüssigkeit in den Vorformling (3) die Teilschritte umfasst von:
Vorblasen der Flüssigkeit mit einem maximalen Druck von ca. 16 bar;
Blasen der Flüssigkeit mit einem maximalen Druck von etwa 40 bar, um den Behälter zu erhalten.

4. Vorrichtung (1) zum Formen und Sterilisieren eines Behälters aus Kunststoff, umfassend:
eine Form (4), die zumindest teilweise aus Metallmaterial besteht, die in zumindest einer offenen Konfiguration konfigurierbar ist, um einen Vorformling (3) aus Kunststoff aufzunehmen, und in einer geschlossenen Konfiguration, wobei sie zumindest einen Gehäusehohlraum (5) des Vorformlings (3) oder des geformten Behälters definiert;
eine Blasdüse (6), die auf den Hals (3b) des geformten Vorformlings (3) aufbringbar ist, um eine Blasflüssigkeit hineinzublasen;
eine Streckstange (23), die zumindest teilweise aus Metallmaterial besteht, die in den Vorformling (3) oder den Behälter einführbar ist;
eine Schaltung zum Evakuieren der Blasflüssigkeit aus dem geformten Behälter, **dadurch gekennzeichnet, dass** sie Mittel zum Anlegen einer Spannungsdifferenz zwischen der Streckstange (23) und der Form (4) umfasst, so dass die Flüssigkeit, die im Inneren des geformten Behälters verblieben ist, bei Atmosphärendruck in Plasma umgewandelt wird.

5. Form- und Sterilisiervorrichtung (1) nach Anspruch 4, wobei die Form (4) zwei Halbformen (4a, 4b) umfasst, die geeignet sind, die Formgebung des Behälterkörpers zu definieren, und eine Bodenplatte, die geeignet ist, den Behälterboden zu definieren.

6. Form- und Sterilisiervorrichtung (1) nach Anspruch 4 oder 5, wobei die zwischen der Streckstange (23) und der Form (4) angelegte Spannungsdifferenz einen Wert von etwa 30 kV aufweist.

7. Maschine zum Formen und Sterilisieren von Behältern aus Kunststoff, umfassend eine Vielzahl von Form- und Sterilisiervorrichtungen (1) nach einem der Ansprüche 4 bis 6.

## Revendications

1. Procédé pour le moulage et la stérilisation d'un récipient en matière plastique, comprenant les étapes de :
préparer un moule (4), au moins partiellement constitué d'un matériau en métal, dans une configuration d'ouverture ;
introduire une paraison (3) en matière plastique dans ledit moule (4) ;
amener ledit moule (4) dans une configuration de fermeture ;
introduire une tige d'étirage (23) au moins partiellement constituée d'un matériau en métal dans ladite paraison (3) ;
souffler un fluide de soufflage dans ladite paraison (3) placée dans le moule (4) et simultanément étirer ladite paraison (3) au moyen de la tige d'étirement (23) de manière à obtenir le récipient,
**caractérisé en ce qu'**il comprend les étapes de :
évacuer le fluide à la fin de l'étape de soufflage et d'étirement ;
appliquer une différence de tension entre ladite tige d'étirement (23) et ledit moule (4) dans la configuration de fermeture de manière à transformer le fluide à la pression atmosphérique, resté à l'intérieur du récipient moulé, en plasma.

2. Procédé selon la revendication 2, dans lequel l'étape consistant à appliquer une différence de tension est réalisée après la fin de l'étape d'évacuation du fluide.

3. Procédé selon la revendication 1 ou 2, dans lequel l'étape consistant à souffler un fluide de soufflage dans ladite paraison (3) comprend les sous-étapes de :
présouffler le fluide ayant une pression maximale d'environ 16 bars ;
souffler le fluide ayant une pression maximale d'environ 40 bars de manière à obtenir le récipient.

4. Dispositif (1) pour le moulage et la stérilisation d'un récipient en matière plastique, comprenant :
un moule (4), au moins partiellement constitué d'un matériau en métal, pouvant être configuré dans au moins une configuration d'ouverture pour recevoir une paraison (3) en matière plastique, et dans une configuration de fermeture dans laquelle il définit au moins une cavité de logement (5) de la paraison (3) ou du récipient moulé ;
une buse de soufflage (6) applicable au col (3b) de la paraison moulée (3) afin de souffler un fluide de soufflage dans celle-ci ;
une tige d'étirage (23) au moins partiellement constituée d'un matériau en métal, pouvant être introduite à l'intérieur de ladite paraison (3) ou dudit récipient ;
un circuit pour évacuer le fluide de soufflage du récipient moulé,
**caractérisé en ce qu'**il comprend des moyens pour appliquer une différence de tension entre ladite tige d'étirement (23) et ledit moule (4) de manière à transformer le fluide à la pression atmosphérique, resté à l'intérieur du récipient moulé, en plasma.

5. Dispositif pour le moulage et la stérilisation (1) selon la revendication 4, dans lequel ledit moule (4) comprend deux demi-moules (4a, 4b) pouvant définir la forme du corps du récipient et une plaque de fond pouvant définir le fond du récipient.

6. Dispositif pour le moulage et la stérilisation (1) selon la revendication 4 ou 5, dans lequel la différence de tension appliquée entre ladite tige d'étirement (23) et ledit moule (4) a une valeur d'environ 30 kV.

7. Machine pour le moulage et la stérilisation de récipients en matière plastique, comprenant une pluralité de dispositifs de moulage et de stérilisation (1) selon l'une quelconque des revendications de 4 à 6.
